(19) Europäisches Patentamt
European Patent Office
Office européen des brevets

(11) **EP 2 177 412 B1**

(12) **EUROPEAN PATENT SPECIFICATION**

(45) Date of publication and mention
of the grant of the patent:
**22.06.2011  Bulletin 2011/25**

(51) Int Cl.:
**B60W 10/06** *(2006.01)*      **B60W 10/18** *(2006.01)*
**B60W 50/02** *(2006.01)*      **F02D 31/00** *(2006.01)*
**B60K 28/16** *(2006.01)*

(21) Application number: **09172554.9**

(22) Date of filing: **08.10.2009**

(54) **Control system and method for internal combustion engine**

Steuerungssystem und Verfahren für Verbrennungsmotor

Système de commande et procédé pour moteur à combustion interne

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.10.2008  JP 2008270365**

(43) Date of publication of application:
**21.04.2010  Bulletin 2010/16**

(73) Proprietor: **Honda Motor Co., Ltd.**
**Minato-ku**
**Tokyo 107-8556 (JP)**

(72) Inventors:
• **Sasaki, Yuji**
**c/o Honda R&D Co., Ltd.**
**Saitama 351-0193 (JP)**
• **Endo, Masatoshi**
**c/o Honda R&D Co., Ltd.**
**Saitama 351-0193 (JP)**
• **Ohnishi, Hiroyuki**
**c/o Honda R&D Co., Ltd.**
**Saitama 351-0193 (JP)**

(74) Representative: **Prechtel, Jörg**
**Weickmann & Weickmann**
**Patentanwälte**
**Postfach 86 08 20**
**81635 München (DE)**

(56) References cited:
**EP-A- 1 908 945     EP-A- 1 953 374**
**US-A- 5 676 111**

**Description**

BACKGROUND OF THE INVENTION

Field of the Invention

The present invention relates to a control system and method for an internal combustion engine which is installed on a vehicle having an anti-lock brake system for preventing wheels from being held in a locked state, wherein the idle speed of the engine is controlled.

Description of the Related Art

Conventionally, as a control system for an internal combustion engine, the Japanese Laid-Open Patent Publication (Kokai) No. H04-169333 discloses the features of the preamble of claim 1. This internal combustion engine is installed on a vehicle, and the control system is comprised of four speed sensors for detecting respective rotational speeds of two drive wheels and two driven wheels, an ASR control unit for controlling braking force, and an engine control unit for controlling engine output.

The ASR control unit determines a slipping state of the vehicle based on detection signals from the four speed sensors, and if the vehicle is in the slipping state, the ASR control unit controls the slipping state of the vehicle by controlling the braking force of brakes of the drive wheels. Further, the ASR control unit transmits a slip signal which indicates that the vehicle is in the slipping state to the engine control unit, and if the braking force control cannot be executed, the ASR control unit transmits an out-of-control signal indicative of the fact to the engine control unit.

On the other hand, the engine control unit calculates a target engine torque according to the slip signal from the ASR control unit, controls the engine output such that an actual engine torque becomes equal to the target engine torque, and when the out-of-control signal is received from the ASR control unit, the engine control unit changes at least one control parameter for the engine output control such that the target engine torque is changed, and generates an appropriate driving force (11th to 18th lines in the upper left column of the fifth page of the publication).

According to the above-described conventional control system for an internal combustion engine, when the braking force control cannot be executed in the case where the vehicle is in the slipping state, the control system merely changes the target engine torque. Therefore, if the wheels are held in the locked state due to a braking operation of the driver, this causes a sudden decrease in the idle speed of the engine, and at worst, there is a fear that the engine stalls.

EP-A-1 908 945 discloses a control system for an internal combustion engine which is installed in a vehicle, the control system comprises idle speed control means for controlling a rotational speed of the engine during idling thereof as an idle speed, and a corresponding control method.

SUMMARY OF THE INVENTION

It is an object of the present invention to provide a control system and method for an internal combustion engine, which are capable of suppressing lowering of idle speed even in the case where wheels are held in a locked state, thereby making it possible to enhance the stability of idling.

To attain the above object, in a first aspect of the present invention, there is provided a control system for an internal combustion engine in accordance with claim 1.

With the configuration of the control system for an internal combustion engine according to the first aspect of the present invention, when the anti-lock brake system is in failure, failure-time control for suppressing lowering of the idle speed is executed. Therefore, even if the wheels are held in the locked state due to failure of the anti-lock brake system, causing an increase in the rotational resistance of the engine, it is possible to properly suppress lowering of the idle speed caused by the increase in the rotational resistance, thereby making it possible to enhance the stability of idling.

Preferably, the idle speed control means executes normal control for the idle speed when the anti-lock brake system is not in failure, the control system further comprising idle speed-detecting means for detecting the idle speed, wherein the idle speed control means includes target idle speed-setting means for setting a target idle speed as a target to which the idle speed is to be controlled, when the failure-time control and the normal control are executed, and feedback control means for feedback-controlling the detected idle speed such that the detected idle speed follows up the target idle speed, when the failure-time control and the normal control are executed, wherein the feedback control means controls a follow-up rate at which the idle speed follows up the target idle speed such that the follow-up rate is higher during execution of the failure-time control than during execution of the normal control.

With the configuration of the preferred embodiment, when the anti-lock brake system is not in failure, normal control of idle speed is executed. Further, when the failure-time control and the normal control are executed, the idle speed is feedback-controlled such that it follows up the target idle speed, and the follow-up rate at which the idle speed follows up the target idle speed is controlled such that it is higher during execution of the failure-time control than during execution of the normal control. Therefore, it is possible to cause the idle speed to rapidly follow up the target idle speed during execution of the failure-time control. This makes it possible to rapidly suppress lowering of the idle speed even when the wheels are held in the locked state due to failure of the anti-lock brake system.

Preferably, the idle speed control means executes normal control for the idle speed when the anti-lock brake system is not in failure, the control system further comprising idle speed-detecting means for detecting the idle speed, wherein the idle speed control means includes target idle speed-setting means for setting a target idle speed as a target to which the idle speed is to be controlled, when the failure-time control and the normal control are executed, and feedback control means for feedback-controlling the detected idle speed such that the detected idle speed follows up the target idle speed, when the failure-time control and the normal control are executed, wherein the target idle speed-setting means sets the target idle speed such that the target idle speed is set to a higher value during execution of the failure-time control than during execution of the normal control.

With the configuration of the preferred embodiment, when the anti-lock brake system is not in failure, the normal control of the idle speed is executed. Further, when the failure-time control and the normal control are executed, the idle speed is feedback-controlled such that it follows up the target idle speed, and when the failure-time control is executed, the target idle speed is set to a higher value than during execution of the normal control. Therefore, during execution of the failure-time control, it is possible to control the idle speed to a higher speed than during execution of the normal control. This makes it possible to positively suppress lowering of the idle speed even when the wheels are held in the locked state due to failure of the anti-lock brake system.

Preferably, the idle speed control means executes normal control for the idle speed, when the anti-lock brake system is not in failure, the control system further comprising idle speed-detecting means for detecting the idle speed, and wherein the vehicle has an automatic transmission equipped with a lockup clutch, for transmitting power of the engine to the wheels, wherein the idle speed control means includes declutching speed-setting means for setting a rotational speed at which the lockup clutch should be disengaged during idling of the engine as a declutching speed, when the failure-time control and the normal control are executed, and clutch control means for controlling the lockup clutch such that the lockup clutch is disengaged when the detected idle speed becomes equal to or lower than the declutching speed, during execution of the failure-time control and the normal control, and wherein the declutching speed-setting means sets the declutching speed to a higher value during execution of the failure-time control than during execution of the normal control.

With the configuration of the preferred embodiment, when the anti-lock brake system is not in failure, the normal control of idle speed is executed. Further, if the idle speed becomes equal to or lower than declutching speed during execution of the failure-time control and the normal control, the lockup clutch is controlled to be disengaged, and when the failure-time control is executed, the declutching speed is set to a higher value than during execution of the normal control. Therefore, during execution of the failure-time control, the lockup clutch is disengaged at a higher idle speed than during execution of the normal control, so that it is possible to reduce wheel-side rotational resistance of the engine in a higher rotational speed range. This makes it possible to positively suppress lowering of the idle speed even when the wheels are held in the locked state due to failure of the anti-lock brake system.

To attain the above object, in a second aspect of the present invention, there is provided a method of controlling an internal combustion engine in accordance with claim 5.

With the configuration according to the second aspect of the present invention, it is possible to obtain the same advantageous effects as provided by the first aspect of the present invention.

Preferably, the idle speed control step includes executing normal control for the idle speed when the anti-lock brake system is not in failure, the method further comprising an idle speed-detecting step detecting the idle speed, wherein the idle speed control step includes a target idle speed-setting step of setting a target idle speed as a target to which the idle speed is to be controlled, when the failure-time control and the normal control are executed, and a feedback control step of feedback-controlling the detected idle speed such that the detected idle speed follows up the target idle speed, when the failure-time control and the normal control are executed, wherein the feedback control step includes controlling a follow-up rate at which the idle speed follows up the target idle speed such that the follow-up rate is higher during execution of the failure-time control than during execution of the normal control.

Preferably, the idle speed control step includes executing normal control for the idle speed when the anti-lock brake system is not in failure, the method further comprising an idle speed-detecting step of detecting the idle speed, wherein the idle speed control step includes a target idle speed-setting step of setting a target idle speed as a target to which the idle speed is to be controlled, when the failure-time control and the normal control are executed, and a feedback control step of feedback-controlling the detected idle speed such that the detected idle speed follows up the target idle speed, when the failure-time control and the normal control are executed, wherein the target idle speed-setting step includes setting the target idle speed such that the target idle speed is set to a higher value during execution of the failure-time control than during execution of the normal control.

Preferably, the idle speed control step includes executing normal control for the idle speed, when the anti-lock brake system is not in failure, the method further comprising an idle speed-detecting step of detecting the idle speed, and wherein the vehicle has an automatic transmission equipped with a lockup clutch, for transmitting power of the engine to the wheels, wherein the idle speed control step includes a declutching speed-setting step of setting a rotational speed at which the lockup clutch should be disengaged during idling of the engine as a declutching speed, when the failure-time control and the normal control are executed, and a clutch control step of controlling the lockup clutch such that the lockup clutch is disengaged when the detected idle speed becomes equal to or lower than the declutching speed, during execution of the failure-time control and the normal control, and wherein the declutching speed-setting step includes setting the declutching speed to a higher value during execution of the failure-time control than during execution of the normal control.

With the configurations of these preferred embodiments, it is possible to obtain the same advantageous effects as provided by the respective corresponding preferred embodiments of the second aspect of the present invention.

The above and other objects, features, and advantages of the present invention will become more apparent from the following detailed description taken in conjunction with the accompanying drawings.

## BRIEF DESCRIPTION OF THE DRAWINGS

FIG. 1 is a schematic view of the arrangement of a control system according to a first embodiment of the present invention, and a vehicle powered by an internal combustion engine to which the control system is applied;

FIG. 2 is a block diagram of the control system;

FIG. 3 is a flowchart of a braking force control process;

FIG. 4 is a flowchart of an idle speed control process;

FIG. 5 is a flowchart of an LC control process;

FIG. 6 is a flowchart of a fuel injection control process;

FIG. 7 is a flowchart of an idle speed control process executed by a control system according to a second embodiment of the present invention; and

FIG. 8 is a flowchart of an idle speed control process executed by a control system according to a third embodiment of the present invention.

## DETAILED DESCRIPTION OF PREFERRED EMBODIMENTS

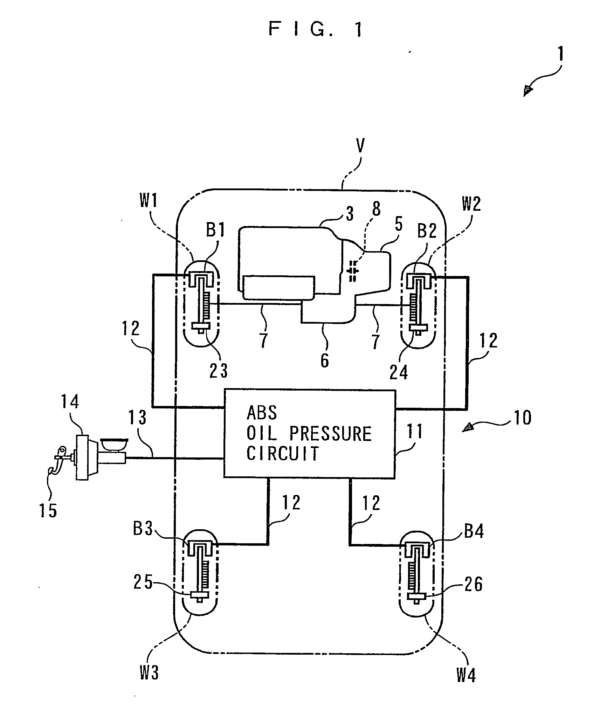

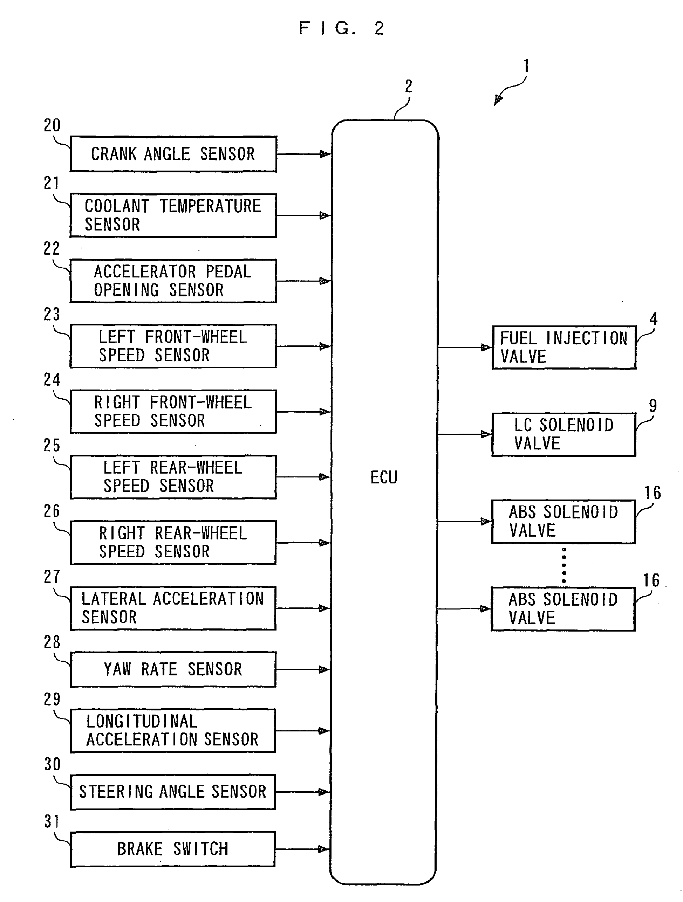

The invention will now be described in detail with reference to the drawings showing preferred embodiments thereof. FIG. 1 schematically shows the arrangement of a control system 1 according to the present embodiment, an internal combustion engine (hereinafter referred to as "the engine") 3 to which the control system 1 is applied, and a vehicle V in which the engine 3 is installed. FIG. 2 schematically shows the arrangement of the control system 1. As shown in FIG. 2, the control system 1 is provided with an ECU 2, and the ECU 2 carries out idle speed control and like controls of the engine 3, as will be described hereinafter.

The engine 3 is a multi-cylinder diesel engine fueled by light oil, and is mounted on a front side of the vehicle V. The engine 3 has a fuel injection valve 4 for each cylinder (only one of which is shown in FIG. 2). Each fuel injection valve 4 is electrically connected to the ECU 2, and the valve-opening time period and the valve-opening timing thereof are controlled by the ECU 2.

Further, the engine 3 is provided with a crank angle sensor 20 and a coolant temperature sensor 21, both of which are electrically connected to the ECU 2 (see FIG. 2). The crank angle sensor 21 (idle speed-detecting means) is formed by a magnet rotor and an MRE pickup, and delivers a CRK signal and a TDC signal, which are both pulse signals, to the ECU 2, along with rotation of the crankshaft, not shown.

One pulse of the CRK signal is delivered whenever the crankshaft rotates through a predetermined angle (e.g. 1°). The ECU 2 calculates the rotational speed of the engine 3 (hereinafter referred to as "the engine speed NE") based on the CRK signal. Further, the TDC signal indicates that each piston in the associated cylinder is in the predetermined crank angle position slightly before the top dead center position at the start of the intake stroke, and one pulse thereof is delivered whenever the crankshaft rotates through a predetermined crank angle.

Further, the coolant temperature sensor 21 detects engine coolant temperature TW, i.e. temperature of engine coolant circulating through cylinder blocks of the engine 3, and delivers a signal indicative of the sensed engine coolant temperature TW to the ECU 2. Further, an accelerator pedal opening sensor 22 is electrically connected to the ECU 2. The accelerator pedal opening sensor 22 detects a stepped-on amount of an accelerator pedal, not shown, of the vehicle V (hereinafter referred to as "the accelerator pedal opening AP") and delivers a signal indicative of the sensed accelerator pedal opening AP to the ECU 2.

On the other hand, the vehicle V is of a front-engine and front-wheel drive type, and the engine 3 is connected to left and right front wheels W1 and W2 via an automatic transmission 5, a final reduction gear 6, and drive shafts 7 and 7.

The automatic transmission 5 is a combination of a torque converter, not shown, equipped with a lockup clutch 8, and a belt continuously variable transmission, not shown, and the lockup clutch 8 is engaged or disengaged by supplying oil pressure from an LC oil pressure circuit, not shown. The LC oil pressure circuit is provided with an LC solenoid valve 9 (see FIG. 2), which is electrically connected to the ECU 2. The ECU 2 controls an operative state of the LC solenoid valve 9, and this controls the engaged/disengaged state of the lockup clutch 8. In this case, if the lockup clutch 8 is in the engaged state, an output shaft of the engine 3 is placed in a state mechanically directly connected to an input shaft of the automatic transmission.

Further, the vehicle V is provided with an anti-lock brake system (hereinafter referred to as "the ABS") 10. When a brake pedal 15 is stepped on by a driver, the ABS 10 controls the braking force of left and right front-wheel brakes B1 and B2, and left and right rear-wheel brakes B3 and B4, while preventing the four brakes B1 to B4 from being held in a locked state, and the ABS 10 is provided with an ABS oil pressure circuit 11.

Each of the four brakes B1 to B4 is of a disk brake type, and is connected to the ABS oil pressure circuit 11 via oil passages 12, and the braking force thereof is changed according to oil pressure supplied from the ABS oil pressure circuit 11.

Further, the ABS oil pressure circuit 11 is connected to a brake booster 14 via an oil passage 13, and the brake pedal 15 is linked to the brake booster 14. When the brake pedal 15 is stepped on, the brake booster 14 generates assist oil pressure for assisting braking force, using negative pressure stored in a negative pressure chamber thereof, as a power source, and the assist oil pressure is supplied to the ABS oil pressure circuit 11 through the oil passage 13.

On the other hand, the ABS oil pressure circuit 11 is provided with a plurality of ABS solenoid valves 16 (only two of which are shown in FIG. 2), which are electrically connected to the ECU 2. As described hereinafter, in the ABS 10, when the above-mentioned assist oil pressure is supplied, the operative states of the ABS solenoid valves 16 are controlled by the ECU 2, and this controls oil pressure supplied from the ABS oil pressure circuit 11 to each of the four brakes B1 to B4. That is, the braking force control is executed.

Furthermore, to the ECU 2 are electrically connected left and right front-wheel speed sensors 23 and 24, left and right rear-wheel speed sensors 25 and 26, a lateral acceleration sensor 27, a yaw rate sensor 28, a longitudinal acceleration sensor 29, a steering angle sensor 30, and a brake switch 31. The left and right front-wheel speed sensors 23 and 24 deliver respective detection signals indicative of the sensed left and right front-wheel speeds to the ECU 2, and the left and right rear-wheel speed sensors 25 and 26 deliver respective detection signals indicative of the sensed left and right rear-wheel speeds to the ECU 2. The ECU 2 calculates a traveling speed of the vehicle V (hereinafter referred to as "the vehicle speed VP") based on the detection signals from these four sensors 23 to 26.

Further, the lateral acceleration sensor 27 delivers a detection signal indicative of the sensed acceleration of the vehicle V in a lateral direction to the ECU 2. The yaw rate sensor 28 delivers a detection signal indicative of the sensed yaw rate of the vehicle V to the ECU 2. In addition, the longitudinal acceleration sensor 29 delivers a detection signal indicative of the sensed acceleration of the vehicle V in a longitudinal direction to the ECU 2, and the steering angle sensor 30 delivers a detection signal indicative of the sensed steering angle of a steering wheel, not shown, of the vehicle V to the ECU 2. Further, if the brake pedal 15 is stepped on, the brake switch 31 delivers an ON signal, whereas if not, the brake switch 31 delivers an OFF signal to the ECU 2.

On the other hand, the ECU 2 is implemented by a microcomputer comprised of a CPU, a RAM, a ROM, and an I/O interface (none of which are shown), determines running conditions of the vehicle V and operating conditions of the engine 3 according to the detected signals delivered from the above-mentioned various sensors 20 to 30, the ON/OFF signal delivered from the brake switch 31, etc. and carries out various control processes. Specifically, the ECU 2 carries out, as described hereinafter, a braking force control process, an idle speed control process, an LC control process, and a fuel injection control process.

It should be noted that in the present embodiment, the ECU 2 corresponds to failure determination means, idle speed control means, idle speed-detecting means, target idle speed-setting means, feedback control means, declutching speed-setting means, and clutch control means.

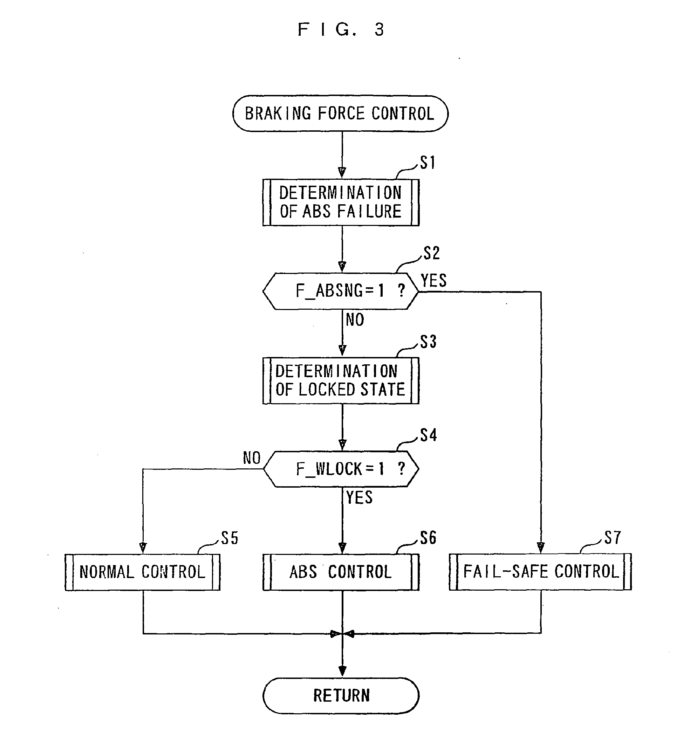

Next, a description will be given of the braking force control process with reference to FIG. 3. The braking force control process is executed for controlling the braking force in the four brakes B1 to B4, and is executed by the ECU 2 at a predetermined control repetition period $\Delta T$ (e.g. 10 msec). As shown in FIG. 3, in the braking force control process, first, in a step 1 (shown as S1 in abbreviated form; the following steps are also shown in abbreviated form), an ABS failure determination process is executed.

The ABS failure determination process is specifically executed as follows: First, based on respective values of the detection signals from the above-mentioned various sensors 23 to 30 and the ON/OFF signal from the switch 31, it is determined whether or not disconnection has occurred between these devices and the ECU 2. Then, if disconnection has occurred, to indicate that the ABS 10 is in failure, an ABS failure flag F_ABSNG is set to 1. On the other hand, if disconnection has not occurred, to indicate that the ABS 10 is normal, the ABS failure flag F_ABSNG is set to 0.

After executing the ABS failure determination process in the step 1, as described above, the process proceeds to a step 2, wherein it is determined whether or not the ABS failure flag F_ABSNG is equal to 1. If the answer to this question is negative (NO), i.e. if the ABS 10 is normal, the process proceeds to a step 3, wherein a locked state determination process is executed.

In the locked state determination process, based on the respective values of the detection signals from the above-mentioned various sensors 23 to 30 and the ON/OFF signal from the switch 31, it is determined whether or not the locked state has occurred in the four wheels W1 to W4. If the locked state has occurred, to indicate this fact, a wheel lock flag F_WLOCK is set to 1. On the other hand, if the locked state has not occurred, to indicate this fact, the wheel lock flag F_WLOCK is set to 0.

After executing the locked state determination process in the step 3, as described above, the process proceeds to a step 4, wherein it is determined whether or not the wheel lock flag F_WLOCK is equal to 1. If the answer to this question is negative (NO), i.e. if the locked state has not occurred in the four wheels W1 to W4, the process proceeds to a step 5, wherein a normal control process is executed.

In the normal control process, based on the above-mentioned assist oil pressure, and the respective values of the detection signals from the sensors 23 to 30 and the ON/OFF signal from the switch 31, the oil pressure supplied to the four brakes B1 to B4 is determined, and the ABS solenoid valves 16 are controlled such that the determined oil pressure is supplied from the ABS oil pressure circuit 11 to the four brakes B1 to B4. After executing the normal control process in the step 5 as described above, the present process is terminated.

On the other hand, if the answer to the question of the step 4 is affirmative (YES), i.e. if the locked state has occurred in the four wheels W1 to W4, the process proceeds to a step 6, wherein the ABS control process is executed. In the ABS control process, based on the above-mentioned assist oil pressure, and the respective values of the detection signals from the sensors 23 to 30 and the ON/OFF signal from the switch 31, the oil pressure supplied to the four brakes B1 to B4 is determined such that the locked state in the four wheels W1 to W4 is released, and the solenoid valves 16 are controlled such that the determined oil pressure is supplied from the ABS oil pressure circuit 11 to the four brakes B1 to B4. After executing the ABS control process in the step 6 as described above, the present process is terminated.

On the other hand, if the answer to the question of the step 2 is affirmative (YES), i.e. if the ABS 10 is in failure, the process proceeds to a step 7, wherein a fail-safe control process is executed. In the fail-safe control process, the control of the solenoid valves 16 is interrupted, and when the above-mentioned assist oil pressure is supplied to the ABS oil pressure circuit 11, predetermined oil pressure corresponding to the assist oil pressure is mechanically supplied from the ABS oil pressure circuit 11 to the four brakes B1 to B4. After executing the fail-safe control process in the step 7 as described above, the present process is terminated.

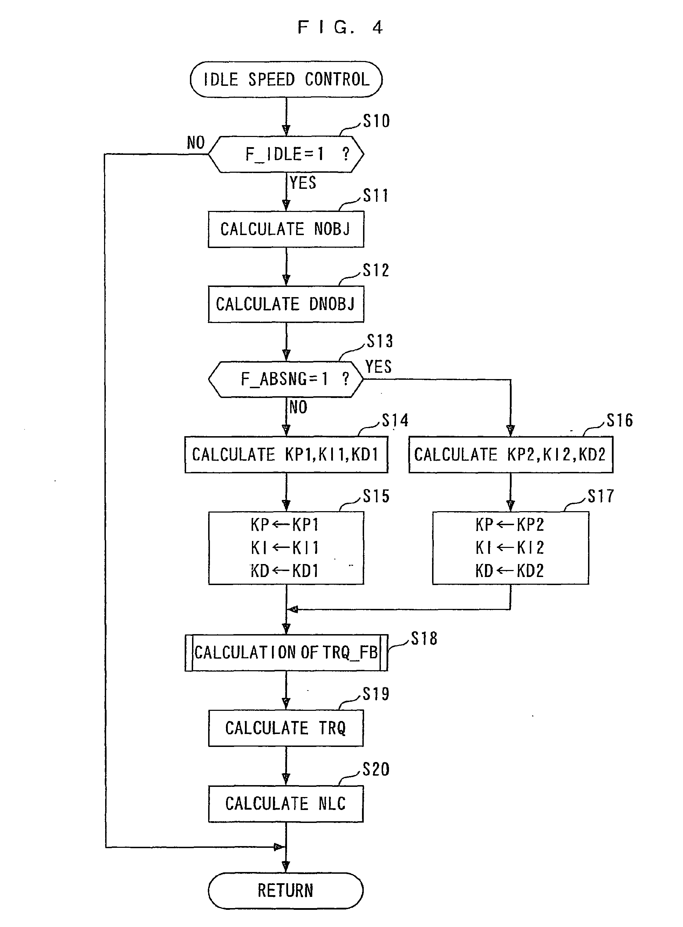

Next, a description will be given of the idle speed control process with reference to FIG. 4. The idle speed control process is executed for feedback-controlling the engine speed NE during idling (hereinafter referred to as "the idle speed") such that the idle speed NE follows up a target idle speed NOBJ. This control process is executed by the ECU 2 at the above-mentioned predetermined control repetition period $\Delta T$.

As shown in FIG. 4, in the control process, first, in a step 10, it is determined whether or not an idle flag F_IDLE is equal to 1. If the idling conditions are satisfied, i.e. if both of the following two conditions (f1) and (f2) are satisfied, the idle flag F_IDLE is set to 1, whereas if not, the idle flag F_IDLE is set to 0.

(f1) The accelerator pedal opening AP is equal to a value indicative of a fully-closed state.
(f2) The engine speed NE is within a predetermined range (e.g. 500 to 1000 rpm).

If the answer to the question of the step 10 is negative (NO), i.e. if the idling conditions are not satisfied, the present process is immediately terminated. On the other hand, if the answer to the question of the step 10 is affirmative (YES), i.e. if the idling conditions are satisfied, it is judged that the idle speed control should be executed, so that the process proceeds to a step 11, wherein the target idle speed NOBJ is calculated by searching a map, not shown, according to the engine coolant temperature TW. To ensure the stability of the idle speed NE, this map is configured such that as the engine coolant temperature TW is lower, the target idle speed NOBJ is set to a higher value.

Next, the process proceeds to a step 12, wherein a rotational difference DNOBJ is calculated by the following equation (1):

$$ DNOBJ(k) = NOBJ(k) - NE(k) \qquad \cdots (1) $$

In the above equation (1), each discrete data item with a symbol (k) indicates data which is sampled (or calculated) at the above-mentioned predetermined control repetition period $\Delta T$, and the symbol k represents the order of the sampling cycle of each discrete data. For example, the symbol k indicates a value sampled at the current control timing, and the symbol (k-1) indicates a value sampled at the last control timing. This point is also similar in discrete data items, referred to hereinafter. It should be noted that in the following description, the symbol (k) attached to each discrete data is omitted as deemed appropriate.

In a step 13 following the step 12, it is determined whether or not the above-mentioned ABS failure flag F_ABSNG is equal to 1. If the answer to this question is negative (NO), i.e. if the ABS 10 is normal, the process proceeds to a step 14, wherein a normal-time value KP1 of a proportional gain KP, a normal-time value KI1 of an integral term gain KI, and a normal-time value KD1 of a differential term gain KD are calculated. Each of these normal-time values KP1, KI1, and KD1 is calculated as a positive value by searching a map, not shown, according to a gear shift position etc.

Then, the process proceeds to a step 15, wherein the proportional gain KP, the integral term gain KI, and the differential term gain KD are set to the above-mentioned normal-time values KP1, KI1, and KD1, respectively.

On the other hand, if the answer to the question of the step 13 is affirmative (YES), i.e. if the ABS 10 is in failure, the process proceeds to a step 16, wherein a failure-time value KP2 of the proportional gain KP, a failure-time value KI2 of the integral term gain KI, a failure-time value KD2 of the differential term gain KD are calculated.

Each of the failure-time values KP2, KI2, and KD2 is calculated as a positive value by searching a map, not shown, according to the gear shift position etc. This map is configured such that two failure-time values KI2 and KD2 are set to larger values than the normal-time values KI1 and KD1, with respect to the same combination of the engine coolant temperature TW and the rotational difference DNOBJ. This is to accelerate the convergence speed of the rotational difference DNOBJ to 0, in a case where the ABS 10 is in failure, compared with a case where the ABS 10 is normal. That is, this is to increase the follow-up rate at which the idle speed NE follows up the target idle speed NOBJ.

Then, the process proceeds to a step 17, wherein the proportional gain KP, the integral term gain KI, and the differential term gain KD are set to the above-mentioned failure-time values KP2, KI2, and KD2, respectively.

In a step 18 following the above-described step 15 or 17, a feedback correction value TRQ_FB is calculated with a PID control algorithm represented by the following equations (2) to (5):

$$\text{TRQ\_FB}(k) = \text{TP}(k) + \text{TI}(k) + \text{TD}(k) \qquad \cdots (2)$$

$$\text{TP}(k) = \text{KP}(k) \cdot \text{DNOBJ}(k) \qquad \cdots (3)$$

$$\text{TI}(k) = \text{KI}(k) \cdot \text{DNOBJ}(k) + \text{TI}(k-1) \qquad \cdots (4)$$

$$\text{TD}(k) = \text{KD}(k) \cdot [\text{DNOBJ}(k) - \text{DNOBJ}(k-1)] \qquad \cdots (5)$$

wherein TP, TI, and TD represent the proportional, the integral term, and the differential term, respectively.

Next, the process proceeds to a step 19, wherein a demanded torque TRQ is calculated by the following equation (6):

$$\text{TRQ}(k) = \text{TRQ\_FB}(k) \qquad \cdots (6)$$

In a step 20 following the step 19, a declutching speed NLC is calculated by searching a map, not shown, according to the engine coolant temperature TW. The declutching speed NLC is a threshold value of the idle speed with reference to which the lockup clutch 8 is switched between an engaged state and a disengaged state. To ensure the stability of the idle speed NE, this map is configured such that as the engine coolant temperature TW is lower, the declutching speed NLC is set to a higher value. The declutching speed NLC is calculated in the step 20 as described above, followed by terminating the present process.

In the control system 1 according to the present embodiment, the idle speed control process is executed as described above. It should be noted that in the idle speed control process in FIG. 4, the control process executed in the steps 14 and 15 corresponds to a normal control process for idle speed, and the control process executed in the steps 16 and 17 corresponds to a failure-time control process for idle speed.

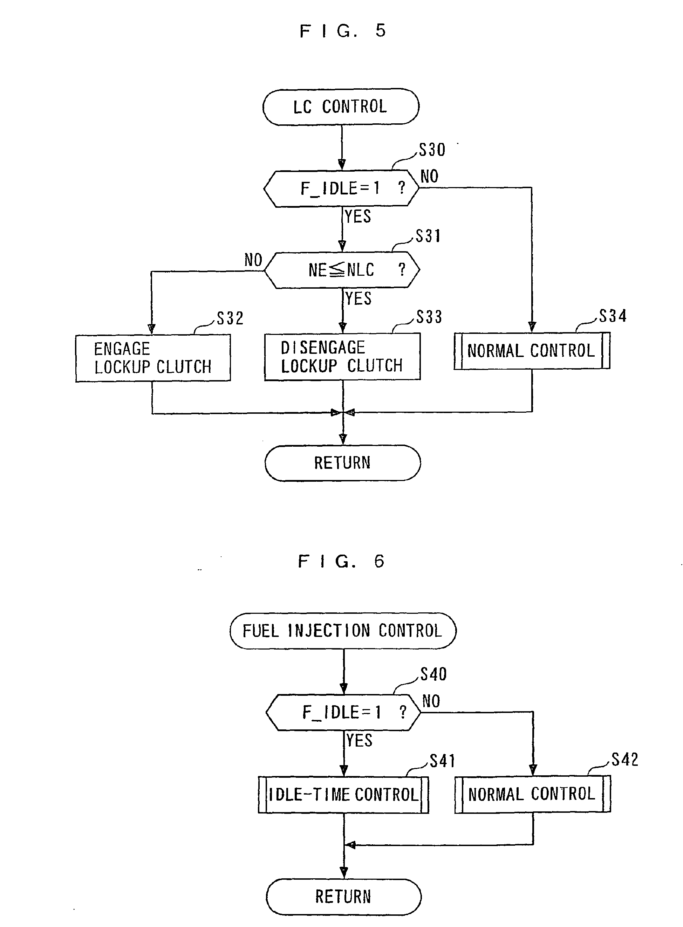

Next, a description will be given of the LC control process with reference to FIG. 5. This control process is executed for switching the lockup clutch 8 between the engaged state and the disengaged state, and is executed by the ECU 2 at the above-mentioned control repetition period ΔT.

As shown in FIG. 5, in this control process, first, in a step 30, it is determined whether or not the above-mentioned idle flag F_IDLE is equal to 1. If the answer to this question is affirmative (YES), i.e. if the engine is idling, the process proceeds to a step 31, wherein it is determined whether or not the idle speed NE is not higher than the declutching speed NLC.

If the answer to this question is negative (NO), it is judged that the lockup clutch 8 should be engaged, so that the process proceeds to a step 32, wherein an engagement control process is executed. In this engagement control process, a control input signal to the LC solenoid valve 9 is determined such that the lockup clutch 8 is caused to be engaged. After executing the engagement control process in the step 32 as mentioned above, the present process is terminated.

On the other hand, if the answer to the question of the step 31 is affirmative (YES), which means that $NE \leqq NLC$ holds, it is judged that the lockup clutch 8 should be disengaged, so that the process proceeds to a step 33, wherein the disengagement control process is executed. In this disengagement control process, a control input signal to the LC solenoid valve 9 is determined such that the lockup clutch 8 is caused to be disengaged. After executing the disengagement control process in the step 33 as mentioned above, the present process is terminated.

On the other hand, if the answer to the question of the step 30 is negative (NO), i.e. if the engine is not idling, the process proceeds to a step 34, wherein a normal control process is executed. In this normal control process, the operation of the lockup clutch 8 is determined according to the operating conditions of the engine 3 and the running conditions of the vehicle V, and the control input signal to the LC solenoid valve 9 is determined such that the determined clutch operation is obtained. After executing the normal control process in the step 34 as described above, the present process is terminated.

Next, a description will be given of the fuel injection control process with reference to FIG. 6. This fuel injection control process is executed for calculating a fuel injection amount QINJ, i.e. a valve-opening time of each fuel injection valve 4, and a valve-opening timing $\phi$ INJ of each fuel injection valve 4. This control process is executed by the ECU 2 in timing synchronous with generation of the TDC signal.

In this control process, first, in a step 40, it is determined whether or not the above-mentioned idle flag F_IDLE is equal to 1. If the answer to this question is affirmative (YES), which means that the engine is idling, the process proceeds to a step 41, wherein an idle-time control process is executed. The idle-time control process is executed as follows:

First, the fuel injection amount QINJ is calculated by searching a map, not shown, according to the above-mentioned demanded torque TRQ calculated in the step 19 in FIG. 4. Then, the valve-opening timing $\phi$ INJ of each fuel injection valve 4 is calculated by searching a map, not shown, according to the calculated fuel injection amount QINJ and the engine speed NE. After executing the idle-time control process in the step 41 as described above, the present process is terminated.

On the other hand, if the answer to the question of the step 40 is negative (NO), the process proceeds to a step 42, wherein a normal control process is executed. In this normal control process, the fuel injection amount QINJ and the valve-opening timing $\phi$ INJ are calculated according to the operating conditions of the engine 3 and the running conditions of the vehicle V. After executing the normal control process in the step 42 as described above, the present process is terminated.

As described above, according to the control system 1 in the first embodiment, in the idle speed control process in FIG. 4, if the ABS 10 is not in failure, the normal control process shown in the steps 10 to 15 and the steps 18 to 20 is executed, and whereas if the ABS 10 is in failure, the failure-time control process shown in the steps 10 to 13, and 16 to 20 is executed. In this failure-time control process , since two feedback gains KP and KD are set to the failure-time values KP2 and KD2 which are larger than the normal-time values KP1 and KD1, it is possible to cause the idle speed NE to follow the target idle speed NOBJ more rapidly than during execution of the normal control process. Therefore, even if the wheels W1 to W4 are held in the locked state due to the failure of the ABS 10, causing an increase in the rotational resistance of the engine 3, it is possible to properly suppress lowering of the idle speed NE caused by the increase in the rotational resistance, whereby it is possible to enhance the stability of idling.

It should be noted that although the first embodiment is an example using the PID control algorithm expressed by the equations (2) to (5) as an algorithm for feedback control, the algorithm for feedback control according to the present invention is not limited to this, but any other suitable algorithm may be used insofar as it is an algorithm which is capable of feedback-controlling the idle speed such that it follows up the target idle speed.

For example, it is possible to employ, as the feedback-control algorithm, a response designating-type control algorithm, such as a sliding mode control algorithm and a back stepping control algorithm, a PI control algorithm, and a PD control algorithm. Even in a case where any of these feedback-control algorithms is used, it is possible to obtain the same advantageous effects as provided by the control system of the first embodiment.

Further, although the first embodiment is an example in which the feedback gain is set to a larger value as a method of increasing the follow-up rate at which the idle speed follows up the target idle speed in the feedback-control algorithm, this is not limitative, any other suitable method may be employed insofar as it is a method which is capable of increasing the follow-up rate at which the idle speed follows up the target idle speed. To use the response designating-type control algorithm as the feedback-control algorithm, for example, in this response designating-type control algorithm, it is required to use a switching function in which a plurality of discrete data items of the rotational difference DNOBJ are set as variables, and multiplier coefficients with which these discrete data items are multiplied respectively are set as respective response designation parameters, and set, when the above-mentioned ABS failure flag F_ABSNG = 1 holds, respective values of the response designation parameters such that a rate at which the rotational difference DNOBJ follows up a value of 0 becomes faster than that in a case where F_ABSNG = 0 holds.

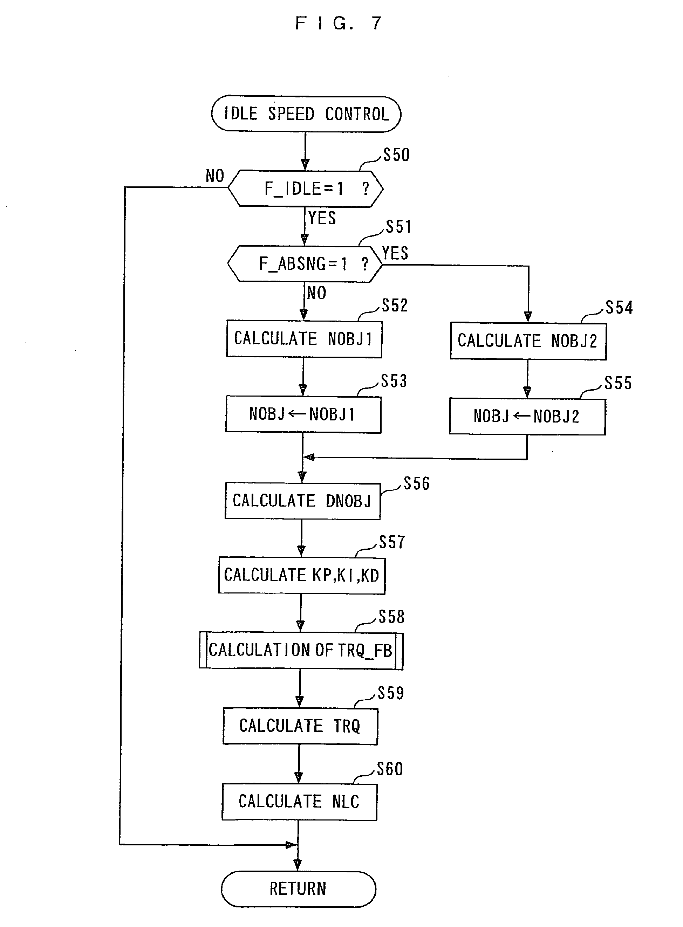

Next, a description will be given of a control system for an internal combustion engine, according to a second embodiment of the present invention. When compared with the above-described control system 1 of the first embodiment, this control system is configured similarly to the control system 1, except for details of the idle speed control process, and therefore, only an idle speed control process in the second embodiment will be described hereinafter with reference to FIG. 7. It should be noted that this control process is also executed by the ECU 2 at the predetermined control repetition period ΔT, similarly to the above-described idle speed control process in FIG. 4.

As shown in FIG. 7, in this control process, first, in a step 50, it is determined whether or not the above-mentioned idle flag .F_IDLE is equal to 1. If the answer to this question is negative (NO), which means that the idling conditions are not satisfied, the present process is immediately terminated. On the other hand, if the answer to the question of the step 50 is affirmative (YES), which means that the idling conditions are satisfied, it is judged that the idle speed control should be executed, so that the process proceeds to a step 51, wherein it is determined whether or not the above-mentioned ABS failure flag F_ABSNG is equal to 1.

If the answer to this question is negative (NO), i.e. if the ABS 10 is normal, the process proceeds to a step 52, wherein the normal-time value NOBJ1 of the target idle speed is calculated by searching a map, not shown, according to the engine coolant temperature TW. Then, in a step 53, the target idle speed NOBJ is set to the normal-time value NOBJ1.

On the other hand, if the answer to the question of the step 51 is affirmative (YES), i.e. if the ABS 10 is in failure, the process proceeds to a step 54, wherein the failure-time value NOBJ2 of the target idle speed is calculated by searching a map, not shown, according to the engine coolant temperature TW. This map is configured such that the failure-time value NOBJ2 is set to a higher value than the above-mentioned normal-time value NOBJ1 with respect to the same engine coolant temperature TW. This is to improve the stability of idling by suppressing the degree of lowering of the idle speed NE, even when the locked state of the wheels is caused in a case where the ABS 10 is in failure. Then, in a step 55, the target idle speed NOBJ is set to the failure-time value NOBJ2.

In a step 56 following the above-mentioned step 53 or 55, the rotational difference DNOBJ is calculated by the same method as applied in the above-described step 12 in FIG. 4.

Then, the process proceeds to a step 57, wherein the proportional gain KP, the integral term gain KI, and the differential term gain KD are calculated. Each of the these gains KP, KI, and KD is calculated as a positive value by searching a map, not shown, according to the gear shift position etc.

In respective steps 58 to 60 following the step 57, the feedback correction value TRQ_FB, the demanded torque TRQ, and the declutching speed NLC are calculated by the same methods as applied in the above-described steps 18 to 20 in FIG. 4. Thereafter, the present process is terminated.

In the control system of the second embodiment, the idle speed control process is executed as described above. It should be noted that in the idle speed control process in FIG. 7, the control process for executing the steps 52 and 53 corresponds to the normal control process for idle speed, and the control process for executing the steps 54 and 55 corresponds to the failure-time control process for idle speed.

As described above, according to the control system of the second embodiment, in the idle speed control process in FIG. 7, if the ABS 10 is not in failure, the normal control process shown in the steps 50 to 53 and 56 to 60 is executed, whereas if the ABS 10 is in failure, the failure-time control process shown in the steps 50, 51, and 54 to 60 is executed. In the failure-time control process, since the target idle speed NOBJ is set to the failure-time value NOBJ2 which is higher than the normal-time value NOBJ1, it is possible to control the idle speed NE to a higher value than that during execution of the normal control process. For this reason, even if the wheels W1 to W4 are held in the locked state due to failure of the ABS 10, causing an increase in the rotational resistance of the engine 3, it is possible to properly suppress lowering of the idle speed NE caused by the increase in the rotational resistance, thereby making it possible to enhance the stability of the idling.

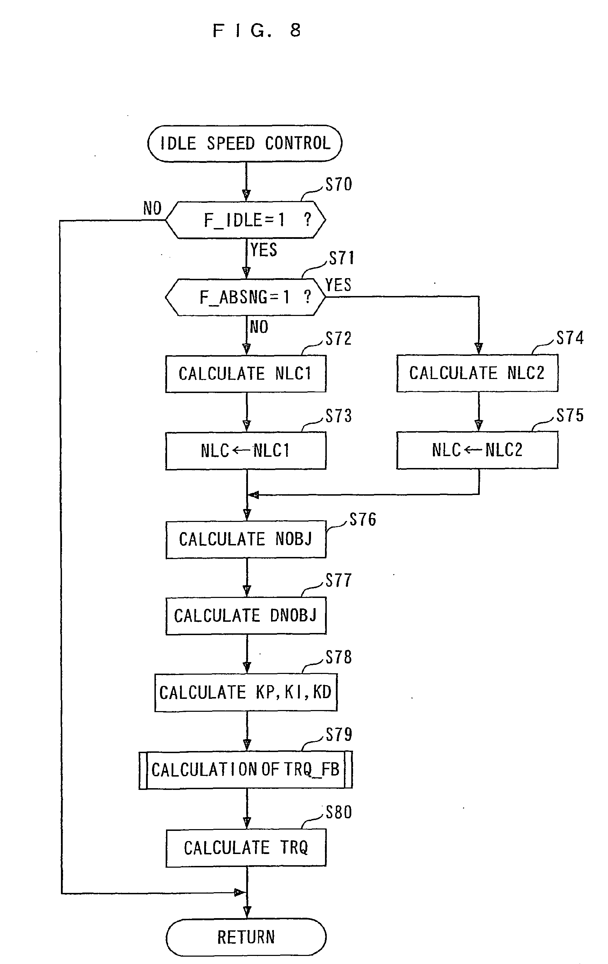

Next, a description will be given of a control system for an internal combustion engine according to a third embodiment of the present invention. When compared with the above-described control system 1 of the first embodiment, this control system is configured similarly to the control system 1 of the first embodiment except for details of the idle speed control process, only an idle speed control process in the third embodiment will be described with reference to FIG. 8. It should be noted that this control process is also executed by the ECU 2 at the predetermined control repetition period ΔT, similarly to the above-described idle speed control process in FIG. 4.

As shown in FIG. 8, in this control process, first, in a step 70, it is determined whether or not the above-mentioned idle flag F_IDLE is equal to 1. If the answer to this question is negative (NO), which means that the idling conditions are not satisfied, the present process is immediately terminated. On the other hand, if the answer to the question of the step 70 is affirmative (YES), which means that the idling conditions are satisfied, it is judged that the idle speed control should be executed, so that the process proceeds to a step 71, wherein it is determined whether or not the above-mentioned ABS failure flag F_ABSNG is equal to 1.

If the answer to this question is negative (NO), which means that the ABS 10 is normal, the process proceeds to a step 72, wherein a normal-time value NLC1 of the declutching speed is calculated by searching a map, not shown, according to the engine coolant temperature TW. To ensure the stability of the idling, this map is configured such that, as the engine coolant temperature TW is lower, the normal-time value NLC1 of the declutching speed is set to a higher value. Then, in a step 73, the declutching speed NLC is set to the normal-time value NLC1.

On the other hand, if the answer to the question of the step 71 is affirmative (YES), which means that the ABS 10 is in failure, the process proceeds to a step 74, wherein a failure-time value NLC2 of the declutching speed is calculated by searching a map, not shown, according to the engine coolant temperature TW. This map is configured such that the failure-time value NLC2 is set to a higher value as the engine coolant temperature TW is lower, and is set to a higher value than the above-mentioned normal-time value NLC1 with respect to the same engine coolant temperature TW. This is to improve the stability of idling by disengaging the lockup clutch 8 at a higher idle speed NE, thereby suppressing the degree of lowering the idle speed NE, even when the locked state of the wheels is caused in a case where the ABS 10 is in failure. Then, in a step 75, the declutching speed NLC is set to the failure-time value NLC2.

In a step 76 following the above-mentioned step 73 or 75, the target idle speed NOBJ is calculated by the same method as applied in the above-mentioned step 11 in FIG. 4. Then, in respective steps 77 to 80, the rotational difference DNOBJ, the three gains KP, KI, and KD, the feedback correction value TRQ_FB, and the demanded torque TRQ are calculated by the same methods as applied in the above-described steps 56 to 60 in FIG. 7. Thereafter, the present process is terminated.

In the control system of the third embodiment, the idle speed control process is executed as above. It should be noted that in the idle speed control process in FIG. 8, the control process for executing the steps 72 and 73 corresponds to the normal control process for idle speed, and the control process for executing the steps 74 and 75 corresponds to the failure-time control process for idle speed.

As described above, according to the control system of the third embodiment, in the idle speed control process in FIG. 8, if the ABS 10 is not in failure, the normal control process shown in the steps 70 to 73 and 76 to 80 is executed, and if the ABS 10 is in failure, the failure-time control process shown in the steps 70, 71, and 74 to 80 is executed. In the failure-time control process, since the declutching speed NLC is set to the failure-time value NLC2 which is higher than the normal-time value NLC1, the lockup clutch 8 is disengaged at a higher idle speed NE than that during execution of the normal control process, whereby it is possible to reduce the rotational resistance of the engine 3 on the side of the wheels W1 to W4 in a higher rotational speed range. Therefore, even if the wheels W1 to W4 are held in the locked state due to failure of the ABS 10, causing an increase in the rotational resistance of the engine 3, it is possible to properly suppress lowering of the idle speed NE caused by the increase of the rotational resistance, thereby making it possible to enhance the stability of idling.

It is further understood by those skilled in the art that the foregoing are preferred embodiments of the invention, and that various changes and modifications may be made without departing from the scope of the claims.

**Claims**

1. A control system for an internal combustion engine which is installed in a vehicle (V) having an anti-lock brake system (10) for preventing wheels (W) from being held in a locked state, the control system controlling a rotational speed of the engine during idling thereof as an idle speed (NE), **characterized by**
   failure determination means (S1) for determining whether or not the anti-lock brake system is in failure, and
   idle speed control means (S41) for executing failure-time control for suppressing lowering of the idle speed when the anti-lock brake system is in failure, and the wheels are held in the locked state causing an increase in the rotational resistance of the engine.

2. A control system as claimed in claim 1, wherein said idle speed control means (S41) executes normal control for the idle speed when the anti-lock brake system (10) is not in failure,
   the control system (1) further comprising idle speed-detecting means (21) for detecting the idle speed (NE),
   wherein said idle speed control means includes:

   target idle speed-setting means for setting a target idle speed (NOBJ) as a target to which the idle speed (NE) is to be controlled, when the failure-time control and the normal control are executed, and

feedback control means for feedback-controlling the detected idle speed (NE) such that the detected idle speed follows up the target idle speed (NOBJ), when the failure-time control and the normal control are executed,

wherein said feedback control means controls a follow-up rate at which the idle speed (NE) follows up the target idle speed (NOBJ) such that the follow-up rate is higher during execution of the failure-time control than during execution of the normal control.

3. A control system as claimed in claim 1, wherein said idle speed control means executes normal control for the idle speed (NE) when the anti-lock brake system (10) is not in failure,
the control system (1) further comprising idle speed-detecting means (21) for detecting the idle speed (NE),
wherein said idle speed control means includes:

target idle speed-setting means for setting a target idle speed (NOBJ) as a target to which the idle speed (NE) is to be controlled, when the failure-time control and the normal control are executed, and
feedback control means for feedback-controlling the detected idle speed (NE) such that the detected idle speed (NE) follows up the target idle speed (NOBJ), when the failure-time control and the normal control are executed,

wherein said target idle speed-setting means sets the target idle speed (NOBJ) such that the target idle speed (NOBJ) is set to a higher value during execution of the failure-time control than during execution of the normal control.

4. A control system as claimed in claim 1, wherein said idle speed control means executes normal control for the idle speed, when the anti-lock brake system (10) is not in failure,
the control system (1) further comprising idle speed-detecting means (21) for detecting the idle speed (NE), and
wherein the vehicle has an automatic transmission equipped with a lockup clutch (8), for transmitting power of the engine (3) to the wheels (W),
wherein said idle speed control means includes:

declutching speed-setting means for setting a rotational speed at which the lockup clutch (8) should be disengaged during idling of the engine (3) as a declutching speed (NLC), when the failure-time control and the normal control are executed, and
clutch control means (9) for controlling the lockup clutch (8) such that the lockup clutch (8) is disengaged when the detected idle speed (NE) becomes equal to or lower than the declutching speed (NLC), during execution of the failure-time control and the normal control, and

wherein said declutching speed-setting means sets the declutching speed (NLC) to a higher value during execution of the failure-time control than during execution of the normal control.

5. A method of controlling an internal combustion engine which is installed in a vehicle (V) having an anti-lock brake system (10) for preventing wheels (W) from being held in a locked state, the method controlling a rotational speed of the engine during idling thereof as an idle speed (NE), **characterized by**
a failure determination step (S1) of determining whether or not the anti-lock brake system is in failure, and
an idle speed control step (S41) of executing failure-time control for suppressing lowering of the idle speed when the anti-lock brake system is in failure, and the wheels are held in the locked state causing an increase in the rotational resistance of the engine.

6. A method as claimed in claim 5, wherein said idle speed control step includes executing normal control for the idle speed when the anti-lock brake system (10) is not in failure,
the method further comprising an idle speed-detecting step detecting the idle speed (NE),
wherein said idle speed control step includes:

a target idle speed-setting step of setting a target idle speed (NOBJ) as a target to which the idle speed (NE) is to be controlled, when the failure-time control and the normal control are executed, and
a feedback control step of feedback-controlling the detected idle speed (NE) such that the detected idle speed follows up the target idle speed (NOBJ), when the failure-time control and the normal control are executed,

wherein said feedback control step includes controlling a follow-up rate at which the idle speed (NE) follows up the target idle speed (NOBJ) such that the follow-up rate is higher during execution of the failure-time control than during execution of the normal control.

**7.** A method as claimed in claim 5, wherein said idle speed control step includes executing normal control for the idle speed (NE) when the anti-lock brake system (10) is not in failure,
the method further comprising an idle speed-detecting step of detecting the idle speed (NE),
wherein said idle speed control step includes:

a target idle speed-setting step of setting a target idle speed (NOBJ) as a target to which the idle speed (NE) is to be controlled, when the failure-time control and the normal control are executed, and
a feedback control step of feedback-controlling the detected idle speed (NE) such that the detected idle speed (NE) follows up the target idle speed (NOBJ), when the failure-time control and the normal control are executed,

wherein said target idle speed-setting step includes setting the target idle speed (NOBJ) such that the target idle speed (NOBJ) is set to a higher value during execution of the failure-time control than during execution of the normal control.

**8.** A method as claimed in claim 5, wherein said idle speed control step includes executing normal control for the idle speed, when the anti-lock brake system (10) is not in failure,
the method further comprising an idle speed-detecting step of detecting the idle speed (NE), and
wherein the vehicle has an automatic transmission equipped with a lockup clutch (8), for transmitting power of the engine (3) to the wheels (W),
wherein said idle speed control step includes:

a declutching speed-setting step of setting a rotational speed at which the lockup clutch (8) should be disengaged during idling of the engine as a declutching speed (NLC), when the failure-time control and the normal control are executed, and
a clutch control step of controlling the lockup clutch (8) such that the lockup clutch (8) is disengaged when the detected idle speed (NE) becomes equal to or lower than the declutching speed (NLC), during execution of the failure-time control and the normal control, and

wherein said declutching speed-setting step includes setting the declutching speed (NLC) to a higher value during execution of the failure-time control than during execution of the normal control.

**Patentansprüche**

**1.** Steuerungssystem für ein Verbrennungsmotor, der in einem Fahrzeug (V) angebracht ist, das ein Anti-Blockierbremssystem (10) zum Verhindern, dass Räder (W) in einem blockierten Zustand gehalten werden, aufweist, wobei das Steuerungssystem eine Drehzahl des Motors während dessen Leerlauf als Leerlaufdrehzahl (NE) steuert/regelt, **gekennzeichnet durch**
Fehlerbestimmungsmittel (S1) zum Bestimmen, ob das Anti-Blockierbremssystem fehlerhaft ist oder nicht, und Leerlaufdrehzahl-Steuermittel (S41) zum Ausführen einer Fehlerzeit-Steuerung/Regelung zum Unterdrücken eines Absinkens der Leerlaufdrehzahl, wenn das Anti-Blockierbremssystem fehlerhaft ist, und die Räder im blockierten Zustand gehalten werden, der eine Zunahme im Drehwiderstand des Motors hervorruft.

**2.** Steuerungssystem nach Anspruch 1, worin das Leerlaufdrehzahlsteuermittel (S41) eine normale Steuerung/Regelung für die Leerlaufdrehzahl durchführt, wenn das Anti-Blockierbremssystem (10) nicht fehlerhaft ist,
wobei das Steuerungssystem (1) ferner ein Leerlaufdrehzahlerfassungsmittel (21) zum Erfassen der Leerlaufdrehzahl (NE) aufweist, worin das Leerlaufdrehzahlsteuermittel enthält:

ein Sollleerlaufdrehzahlsetzmittel zum Setzen einer Solllerlaufdrehzahl (NOBJ) als Ziel, auf das die Leerlaufdrehzahl (NE) geregelt werden soll, wenn die Fehlerzeit-Steuerung/Regelung und die normale Steuerung/Regelung ausgeführt werden, und
ein Rückkopplungsregelmittel zum rückkoppelnden Regeln der erfassten Leerlaufdrehzahl (NE) derart, dass die erfasste Leerlaufdrehzahl der Sollleerlaufdrehzahl (NOBJ) folgt, wenn die Fehlerzeit-Steuerung/Regelung ausgeführt werden,

worin das Rückkopplungs-Regelungsmittel eine Folgerate, mit der die Leerlaufdrehzahl (NE) der Sollleerlaufdrehzahl (NOBJ) folgt, derart regelt, dass die Folgerate während der Ausführung der Fehlerzeit-Steuerung/Regelung höher ist als während der Ausführung der normalen Steuerung/Regelung.

3. Steuerungssystem nach Anspruch 1, worin das Leerlaufdrehzahlsteuermittel normale Steuerung/Regelung für die Leerlaufdrehzahl (NE) ausführt, wenn das Anti-Blockierbremssystem (10) nicht fehlerhaft ist, wobei das Steuerungssystem (1) ferner ein Leerlaufdrehzahlerfassungsmittel (21) zum Erfassen der Leerlaufdrehzahl (NE) aufweist, worin das Leerlaufdrehzahlsteuermittel enthält:

ein Sollleerlaufdrehzahlsetzmittel zum Setzen einer Sollleerlaufdrehzahl (NOBJ) als Ziel, zu dem die Leerlaufdrehzahl (NE) geregelt werden soll, wenn die Fehlerzeit-Steuerung/Regelung und die normale Steuerung/Regelung ausgeführt werden, und

ein Rückkopplungs-Regelmittel zum rückkoppelnden Regeln der erfassten Leerlaufdrehzahl (NE) derart, dass die erfasste Leerlaufdrehzahl (NE) der Sollleerlaufdrehzahl (NOBJ) folgt, wenn die Fehlerzeitsteuerung/Regelung und die normale Steuerung/Regelung ausgeführt werden,

worin das Sollleerlaufdrehzahlsetzmittel die Sollleerlaufdrehzahl (NOBJ) derart setzt, dass die Sollleerlaufdrehzahl (NOBJ) während der Ausführung der Fehlerzeit-Steuerung/Regelung auf einen höheren Wert gesetzt wird als während der Ausführung der normalen Steuerung/Regelung.

4. Steuerungssystem nach Anspruch 1, worin das Leerlaufdrehzahlsteuerungsmittel die normale Steuerung/Regelung für die Leerlaufdrehzahl ausführt, wenn das Anti-Blockierbremssystem (10) nicht fehlerhaft ist, wobei das Steuerungssystem (1) ferner ein Leerlaufdrehzahlerfassungsmittel (21) zum Erfassen der Leerlaufdrehzahl (NE) aufweist, und worin das Fahrzeug ein Automatikgetriebe aufweist, das mit einer Überbrückungskupplung (8) ausgestattet ist, um die Kraft des Motors (3) auf die Räder (W) zu übertragen, worin das Leerlaufdrehzahlsteuermittel enthält:

ein Entkupplungsdrehzahlsetzmittel zum Setzen einer Drehzahl, bei der die Überbrückungskupplung (8) während des Leerlaufs des Motors (3) ausgerückt werden sollte, als Entkupplungsdrehzahl (NLC), wenn die Fehlerzeit-Steuerung/Regelung und die normale Steuerung/Regelung ausgeführt werden, und

ein Kupplung/Steuermittel (9) zum Steuern/Regeln der Überbrückungskupplung (8) derart, dass die Überbrückungskupplung (8) ausgerückt wird, wenn die erfasste Leerlaufdrehzahl (NE) gleich oder niedriger als die Entkupplungsdrehzahl (NLC) wird, während der Ausführung der Fehlerzeit-Steuerung/Regelung und der normalen Steuerung/Regelung, und

worin das Entkupplungsdrehzahlsetzmittel die Entkupplungsdrehzahl (NLC) während der Ausführung der Fehlerzeit-Steuerung/Regelung auf einen höheren Wert setzt als während der Ausführung der normalen Steuerung/Regelung.

5. Verfahren zum Steuern/Regeln eines Verbrennungsmotors, der in einem Fahrzeug (V) angebracht ist, das ein Anti-Blockierbremssystem (10) zum Verhindern, dass Räder (W) in einem blockierten Zustand gehalten werden, aufweist, wobei das Verfahren eine Drehzahl des Motors während dessen Leerlauf als Leerlaufdrehzahl (NE) steuert/regelt, **gekennzeichnet durch**:

einen Fehlerbestimmungsschritt (S1) zum Bestimmen, ob das Anti-Blockierbremssystem fehlerhaft ist oder nicht, und

ein Leerlaufdrehzahlsteuerschritt (S41) zur Ausführung einer Fehlerzeit-Steuerung/Regelung zum Unterdrücken eines Absinkens der Leerlaufdrehzahl, wenn das Anti-Blockierbremssystem fehlerhaft ist und die Räder in einem blockierten Zustand gehalten werden, der eine Zunahme im Drehwiderstand des Motors bewirkt.

6. Verfahren nach Anspruch 5, worin der Leerlaufdrehzahlsteuerschritt das Ausführen einer normalen Steuerung/Regelung für die Leerlaufdrehzahl enthält, wenn das Anti-Blockierbremssystem (10) nicht fehlerhaft ist, wobei das Verfahren ferner einen Leerlauferfassungsschritt aufweist, der die Leerlaufdrehzahl (NE) erfasst, worin der Leerlaufdrehzahlsteuerschritt enthält:

ein Sollleerlaufdrehzahlsetzschritt zum Setzen einer Solllerlaufdrehzahl (NOBJ) als Ziel, auf das die Leerlaufdrehzahl (NE) geregelt werden soll, wenn die Fehlerzeit-Steuerung/Regelung und die normale Steuerung/Regelung ausgeführt werden, und

ein Rückkopplungsregelschritt zum rückkoppelnden Regeln der erfassten Leerlaufdrehzahl (NE) derart, dass die erfasste Leerlaufdrehzahl der Sollleerlaufdrehzahl (NOBJ) folgt, wenn die Fehlerzeit-Steuerung/Regelung ausgeführt werden,

worin das Rückkopplungs-Regelschritt eine Folgerate, mit der die Leerlaufdrehzahl (NE) der Sollleeriaufdrehzahl (NOBJ) folgt, derart regelt, dass die Folgerate während der Ausführung der Fehlerzeit-Steuerung/Regelung höher ist als während der Ausführung der normalen Steuerung/Regelung.

7. Verfahren nach Anspruch 5, worin der Leerlaufdrehzahlsteuerschritt das Ausführen einer normalen Steuerung/Regelung für die Leerlaufdrehzahl enthält, wenn das Anti-Blockierbremssystem (10) nicht fehlerhaft ist, wobei das Verfahren ferner einen Leerlauferfassungsschritt aufweist, der die Leerlaufdrehzahl (NE) erfasst, worin der Leerlaufdrehzahlsteuerschritt enthält:

   ein Sollleerlaufdrehzahlsetzschritt zum Setzen einer Sollleerlaufdrehzahl (NOBJ) als Ziel, zu dem die Leerlaufdrehzahl (NE) geregelt werden soll, wenn die Fehlerzeit-Steuerung/Regelung und die normale Steuerung/Regelung ausgeführt werden, und
   ein Rückkopplungs-Regelschritt zum rückkoppelnden Regeln der erfassten Leerlaufdrehzahl (NE) derart, dass die erfasste Leerlaufdrehzahl (NE) der Sollleerlaufdrehzahl (NOBJ) folgt, wenn die Fehlerzeitsteuerung/Regelung und die normale Steuerung/Regelung ausgeführt werden,

   worin das Sollleerlaufdrehzahlsetzschritt die Sollleerlaufdrehzahl (NOBJ) derart setzt, dass die Sollleerlaufdrehzahl (NOBJ) während der Ausführung der Fehlerzeit-Steuerung/Regelung auf einen höheren Wert gesetzt wird als während der Ausführung der normalen Steuerung/Regelung.

8. Verfahren nach Anspruch 5, worin der Leerlaufdrehzahlsteuerschritt das Ausführen einer normalen Steuerung/Regelung für die Leerlaufdrehzahl enthält, wenn das Anti-Blockierbremssystem (10) nicht fehlerhaft ist, wobei das Verfahren ferner einen Leerlauferfassungsschritt aufweist, der die Leerlaufdrehzahl (NE) erfasst, worin der Leerlaufdrehzahlsteuerschritt enthält:

   worin das Fahrzeug ein Automatikgetriebe aufweist, das mit einer Überbrückungskupplung (8) ausgestattet ist, um die Kraft des Motors (3) auf die Räder (W) zu übertragen,
   worin das Leerlaufdrehzahlsteuerschritt enthält:

   ein Entkupplungsdrehzahlsetzschritt zum Setzen einer Drehzahl, bei der die Überbrückungskupplung (8) während des Leerlaufs des Motors (3) ausgerückt werden sollte, als Entkupplungsdrehzahl (NLC), wenn die Fehlerzeit-Steuerung/Regelung und die normale Steuerung/Regelung ausgeführt werden, und
   ein Kupplung/Steuerschritt (9) zum Steuern/Regeln der Überbrückungskupplung (8) derart, dass die Überbrückungskupplung (8) ausgerückt wird, wenn die erfasste Leerlaufdrehzahl (NE) gleich oder niedriger als die Entkupplungsdrehzahl (NLC) wird, während der Ausführung der Fehlerzeit-Steuerung/Regelung und der normalen Steuerung/Regelung, und

   worin das Entkupplungsdrehzahlsetzschritt die Entkupplungsdrehzahl (NLC) während der Ausführung der Fehlerzeit-Steuerung/Regelung auf einen höheren Wert setzt als während der Ausführung der normalen Steuerung/Regelung.

**Revendications**

1. Système de commande destiné à un moteur à combustion interne qui est installé dans un véhicule (V) ayant un système de freinage antiblocage (10) pour empêcher que les roues (W) ne soient maintenues dans un état verrouillé, le système de commande commandant un régime de rotation du moteur pendant le fonctionnement au ralenti de celui-ci en tant que régime de ralenti (NE), **caractérisé par**
un moyen de détermination de panne (S1) pour déterminer si le système de freinage antiblocage est en panne, et
un moyen de commande de régime de ralenti (S41) pour exécuter une commande de temps de panne afin de supprimer la réduction du régime de ralenti lorsque le système de freinage antiblocage est en panne, et que les roues sont maintenues dans l'état verrouillé ce qui provoque une augmentation de la résistance rotationnelle du moteur.

2. Système de commande selon la revendication 1, dans lequel ledit moyen de commande de régime de ralenti (S41) exécute une commande normale du régime de ralenti lorsque le système de freinage antiblocage (10) n'est pas en panne,
le système de commande (1) comprenant en outre un moyen de détection de régime de ralenti (21) pour détecter le régime de ralenti (NE),

dans lequel ledit moyen de commande de régime de ralenti comprend :

un moyen de réglage de régime de ralenti cible pour régler un régime de ralenti cible (NOBJ) en tant que cible à laquelle le régime de ralenti (NE) doit être commandé, lorsque la commande de temps de panne et la commande normale sont exécutées, et

un moyen de commande par rétroaction pour commander par rétroaction le régime de ralenti détecté (NE) de sorte que le régime de ralenti détecté suive le régime de ralenti cible (NOBJ), lorsque la commande de temps de panne et la commande normale sont exécutées,

dans lequel ledit moyen de commande par rétroaction commande une vitesse de suivi à laquelle le régime de ralenti (NE) suit le régime de ralenti cible (NOBJ) de telle sorte que la vitesse de suivi pendant l'exécution de la commande de temps de panne soit supérieure à celle pendant l'exécution de la commande normale.

**3.** Système de commande selon la revendication 1, dans lequel ledit moyen de commande de régime de ralenti exécute la commande normale pour le régime de ralenti (NE) lorsque le système de freinage antiblocage (10) n'est pas en panne,

le système de commande (1) comprenant en outre un moyen de détection de régime de ralenti (21) pour détecter le régime de ralenti (NE),

dans lequel ledit moyen de commande de régime de ralenti comprend :

un moyen de réglage de régime de ralenti cible pour régler un régime de ralenti cible (NOBJ) en tant que cible à laquelle le régime de ralenti (NE) doit être commandé, lorsque la commande de temps de panne et la commande normale sont exécutées, et

un moyen de commande par rétroaction pour commander par rétroaction le régime de ralenti détecté (NE) de sorte que le régime de ralenti détecté (NE) suive le régime de ralenti cible (NOBJ), lorsque la commande de temps de panne et la commande normale sont exécutées,

dans lequel ledit moyen de réglage de régime de ralenti cible règle le régime de ralenti cible (NOBJ) de sorte que le régime de ralenti cible (NOBJ) soit réglé à une valeur pendant l'exécution de la commande de temps de panne supérieure à celle pendant l'exécution de la commande normale.

**4.** Système de commande selon la revendication 1, dans lequel ledit moyen de commande de régime de ralenti exécute la commande normale pour le régime de ralenti, lorsque le système de freinage antiblocage (10) n'est pas en panne,

le système de commande (1) comprenant en outre un moyen de détection de régime de ralenti (21) pour détecter le régime de ralenti (NE), et

dans lequel le véhicule comporte une transmission automatique équipée d'un embrayage de verrouillage (8), pour transmettre la puissance du moteur (3) aux roues (W),

dans lequel ledit moyen de commande de régime de ralenti comprend :

un moyen de réglage de régime de débrayage pour régler un régime de rotation auquel l'embrayage de verrouillage (8) doit être désengagé pendant le fonctionnement du moteur (3) au ralenti en tant que régime de débrayage (NLC), lorsque la commande de temps de panne et la commande normale sont exécutées, et

un moyen de commande d'embrayage (9) pour commander l'embrayage de verrouillage (8) de sorte que l'embrayage de verrouillage (8) soit désengagé lorsque le régime de ralenti détecté (NE) devient inférieur ou égal au régime de débrayage (NLC), pendant l'exécution de la commande de temps de panne et la commande normale, et dans lequel ledit moyen de réglage de régime de débrayage règle le régime de débrayage (NLC) à une valeur pendant l'exécution de la commande de temps de panne supérieure à celle pendant l'exécution de la commande normale.

**5.** Procédé de commande d'un moteur à combustion interne qui est installé dans un véhicule (V) ayant un système de freinage antiblocage (10) pour empêcher que les roues (W) ne soient maintenues dans un état verrouillé, le procédé commandant un régime de rotation du moteur pendant le fonctionnement au ralenti de celui-ci en tant que régime de ralenti (NE), **caractérisé par**

une étape de détermination de panne (S1) pour déterminer si le système de freinage antiblocage est en panne, et

une étape de commande de régime de ralenti (S41) pour exécuter une commande de temps de panne afin de supprimer la réduction du régime de ralenti lorsque le système de freinage antiblocage est en panne, et que les roues sont maintenues dans l'état verrouillé ce qui provoque une augmentation de la résistance rotationnelle du moteur.

**6.** Procédé selon la revendication 5, dans lequel ladite étape de commande de régime de ralenti comprend l'exécution d'une commande normale du régime de ralenti lorsque le système de freinage antiblocage (10) n'est pas en panne, le procédé comprenant en outre une étape de détection de régime de ralenti détectant le régime de ralenti (NE), dans lequel ladite étape de commande de régime de ralenti comprend :

une étape de réglage de régime de ralenti cible pour régler un régime de ralenti cible (NOBJ) en tant que cible à laquelle le régime de ralenti (NE) doit être commandé, lorsque la commande de temps de panne et la commande normale sont exécutées, et
une étape de commande par rétroaction pour commander par rétroaction le régime de ralenti détecté (NE) de sorte que le régime de ralenti détecté suive le régime de ralenti cible (NOBJ), lorsque la commande de temps de panne et la commande normale sont exécutées,

dans lequel ladite étape de commande par rétroaction comprend la commande d'une vitesse de suivi à laquelle le régime de ralenti (NE) suit le régime de ralenti cible (NOBJ) de telle sorte que la vitesse de suivi pendant l'exécution de la commande de temps de panne soit supérieure à celle pendant l'exécution de la commande normale.

**7.** Procédé selon la revendication 5, dans lequel ladite étape de commande de régime de ralenti comprend l'exécution de la commande normale pour le régime de ralenti (NE) lorsque le système de freinage antiblocage (10) n'est pas en panne,
le procédé comprenant en outre une étape de détection de régime de ralenti pour détecter le régime de ralenti (NE), dans lequel ladite étape de commande de régime de ralenti comprend :

une étape de réglage de régime de ralenti cible pour régler un régime de ralenti cible (NOBJ) en tant que cible à laquelle le régime de ralenti (NE) doit être commandé, lorsque la commande de temps de panne et la commande normale sont exécutées, et
une étape de commande par rétroaction pour commander par rétroaction le régime de ralenti détecté (NE) de sorte que le régime de ralenti détecté (NE) suive le régime de ralenti cible (NOBJ), lorsque la commande de temps de panne et la commande normale sont exécutées,

dans lequel ladite étape de réglage de régime de ralenti cible comprend le réglage du régime de ralenti cible (NOBJ) de sorte que le régime de ralenti cible (NOBJ) soit réglé à une valeur pendant l'exécution de la commande de temps de panne supérieure à celle pendant l'exécution de la commande normale.

**8.** Procédé selon la revendication 5, dans lequel ladite étape de commande de régime de ralenti comprend l'exécution de la commande normale pour le régime de ralenti, lorsque le système de freinage antiblocage (10) n'est pas en panne,
le procédé comprenant en outre une étape de détection de régime de ralenti pour détecter le régime de ralenti (NE), et dans lequel le véhicule comporte une transmission automatique équipée d'un embrayage de verrouillage (8), pour transmettre la puissance du moteur (3) aux roues (W),
dans lequel ladite étape de commande de régime de ralenti comprend :

une étape de réglage de régime de débrayage pour régler un régime de rotation auquel l'embrayage de verrouillage (8) doit être désengagé pendant le fonctionnement du moteur au ralenti en tant que régime de débrayage (NLC), lorsque la commande de temps de panne et la commande normale sont exécutées, et
une étape de commande d'embrayage pour commander l'embrayage de verrouillage (8) de sorte que l'embrayage de verrouillage (8) soit désengagé lorsque le régime de ralenti détecté (NE) devient inférieur ou égal au régime de débrayage (NLC), pendant l'exécution de la commande de temps de panne et la commande normale, et dans lequel ladite étape de réglage de régime de débrayage comprend le réglage du régime de débrayage (NLC) à une valeur pendant l'exécution de la commande de temps de panne supérieure à celle pendant l'exécution de la commande normale.

FIG. 1

# F I G. 2

F I G. 3

```
               ( BRAKING FORCE CONTROL )
                          │
                          ▼                S1
                ┌─────────────────┐
                │ DETERMINATION   │
                │ OF ABS FAILURE  │
                └─────────────────┘
                          │
                          ▼                S2
                                         YES
                < F_ABSNG=1  ? >──────────────────┐
                          │NO                     │
                          ▼                S3      │
                ┌─────────────────┐                │
                │ DETERMINATION   │                │
                │ OF LOCKED STATE │                │
                └─────────────────┘                │
                          │                        │
                          ▼                S4      │
            NO                                     │
      ┌──────────< F_WLOCK=1  ? >                  │
      │                   │YES                     │
      ▼          S5       ▼          S6            ▼          S7
┌─────────────┐   ┌─────────────┐        ┌──────────────────┐
│NORMAL CONTROL│  │ ABS CONTROL │        │ FAIL-SAFE CONTROL│
└─────────────┘   └─────────────┘        └──────────────────┘
      │                   │                        │
      └───────────────────┼────────────────────────┘
                          ▼
                    (  RETURN  )
```

F I G.  4

```
          ┌──────────────────────────┐
          │   IDLE  SPEED  CONTROL    │
          └──────────────────────────┘
                        │
                        ▼            ┌ S10
      NO    ╱───────────────────────╲
   ◄────────┤      F_IDLE=1  ?       │
          │ ╲───────────────────────╱
          │             │ YES
          │             ▼            ┌ S11
          │   ┌──────────────────────┐
          │   │   CALCULATE  NOBJ     │
          │   └──────────────────────┘
          │             │
          │             ▼            ┌ S12
          │   ┌──────────────────────┐
          │   │   CALCULATE  DNOBJ    │
          │   └──────────────────────┘
          │             │
          │             ▼            ┌ S13
          │   ╱───────────────────────╲  YES
          │   ┤     F_ABSNG=1  ?       ├──────────────┐
          │   ╲───────────────────────╱              │
          │             │ NO                          │
          │             ▼       ┌ S14                 ▼       ┌ S16
          │   ┌──────────────────────┐   ┌──────────────────────┐
          │   │ CALCULATE KP1,KI1,KD1 │   │ CALCULATE KP2,KI2,KD2 │
          │   └──────────────────────┘   └──────────────────────┘
          │             │       ┌ S15                 │       ┌ S17
          │   ┌──────────────────────┐   ┌──────────────────────┐
          │   │      KP←KP1           │   │      KP←KP2           │
          │   │      KI←KI1           │   │      KI←KI2           │
          │   │      KD←KD1           │   │      KD←KD2           │
          │   └──────────────────────┘   └──────────────────────┘
          │             │                             │
          │             ◄─────────────────────────────┘
          │             ▼            ┌ S18
          │   ┌──────────────────────┐
          │   │ CALCULATION OF TRQ_FB │
          │   └──────────────────────┘
          │             │
          │             ▼            ┌ S19
          │   ┌──────────────────────┐
          │   │   CALCULATE  TRQ      │
          │   └──────────────────────┘
          │             │
          │             ▼            ┌ S20
          │   ┌──────────────────────┐
          │   │   CALCULATE  NLC      │
          │   └──────────────────────┘
          │             │
          └─────────────►│
                        ▼
          ┌──────────────────────────┐
          │          RETURN           │
          └──────────────────────────┘
```

F I G. 5

F I G. 6

F I G. 7

```
        ┌──────────────────────┐
        │  IDLE SPEED CONTROL  │
        └──────────┬───────────┘
                   │
                   ▼              ╭S50
   NO    ╱─────────────────╲
 ◄───────┤    F_IDLE=1  ?   │
         ╲─────────────────╱
                   │ YES
                   ▼              ╭S51
         ╱─────────────────╲ YES
         │   F_ABSNG=1  ?   ├──────────────────┐
         ╲─────────────────╱                   │
                   │ NO                         │
                   ▼        ╭S52                ▼        ╭S54
         ┌──────────────────┐       ┌──────────────────┐
         │  CALCULATE NOBJ1 │       │  CALCULATE NOBJ2 │
         └────────┬─────────┘       └────────┬─────────┘
                  │        ╭S53              │        ╭S55
         ┌──────────────────┐       ┌──────────────────┐
         │   NOBJ←NOBJ1     │       │   NOBJ←NOBJ2     │
         └────────┬─────────┘       └────────┬─────────┘
                  │                           │
                  ▼◄──────────────────────────┘
         ┌──────────────────┐       ╭S56
         │  CALCULATE DNOBJ │
         └────────┬─────────┘
                  ▼              ╭S57
         ┌──────────────────┐
         │ CALCULATE KP,KI,KD│
         └────────┬─────────┘
                  ▼              ╭S58
        ┌┤──────────────────┤┐
        ││CALCULATION OF TRQ_FB││
        └┤──────────────────┤┘
                  ▼              ╭S59
         ┌──────────────────┐
         │   CALCULATE TRQ  │
         └────────┬─────────┘
                  ▼              ╭S60
         ┌──────────────────┐
         │   CALCULATE NLC  │
         └────────┬─────────┘
                  ▼
         ┌──────────────────┐
         │      RETURN      │
         └──────────────────┘
```

F I G. 8

```
          ┌─────────────────────────┐
          │   IDLE SPEED CONTROL    │
          └─────────────────────────┘
                      │
                      ▼           S70
    NO      ╱─────────────────────╲
  ◄─────────┤      F_IDLE=1  ?     ├
            ╲─────────────────────╱
                      │ YES
                      ▼           S71
                                      YES
            ╱─────────────────────╲────────────────────────┐
            ┤     F_ABSNG=1  ?     ├                        │
            ╲─────────────────────╱                         │
                      │ NO                                  │
                      ▼        S72                          ▼         S74
          ┌─────────────────────┐              ┌─────────────────────┐
          │   CALCULATE NLC1     │              │   CALCULATE NLC2     │
          └─────────────────────┘              └─────────────────────┘
                      │        S73                          │         S75
                      ▼                                     ▼
          ┌─────────────────────┐              ┌─────────────────────┐
          │     NLC←NLC1         │              │     NLC←NLC2         │
          └─────────────────────┘              └─────────────────────┘
                      │                                     │
                      ▼◄────────────────────────────────────┘
                                S76
          ┌─────────────────────┐
          │   CALCULATE NOBJ     │
          └─────────────────────┘
                      │        S77
                      ▼
          ┌─────────────────────┐
          │   CALCULATE DNOBJ    │
          └─────────────────────┘
                      │        S78
                      ▼
          ┌─────────────────────┐
          │  CALCULATE KP,KI,KD  │
          └─────────────────────┘
                      │        S79
                      ▼
          ║─────────────────────║
          ║ CALCULATION OF TRQ_FB║
          ║─────────────────────║
                      │        S80
                      ▼
          ┌─────────────────────┐
          │   CALCULATE TRQ      │
          └─────────────────────┘
                      │
                      ▼
          ┌─────────────────────┐
          │       RETURN         │
          └─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04169333 B

- EP 1908945 A